# EUROPÄISCHE PATENTSCHRIFT

(11) **EP 1 457 369 B1**
(45) Veröffentlichungstag und Bekanntmachung des Hinweises auf die Patenterteilung: **26.08.2009**
(21) Anmeldenummer: 03290619.0
(22) Anmeldetag: 12.03.2003
(51) Int. Cl.: B60H 1/32, B60H 1/00

(54) **Zusatzklimaanlage für ein Kraftfahrzeug**
Auxiliary vehicle air-conditioning unit
Unité de climatisation auxiliaire pour véhicule automobile

(43) Veröffentlichungstag der Anmeldung: 15.09.2004
(73) Patentinhaber: Behr France Rouffach SAS, 68250 Rouffach (FR)
(72) Erfinder: Klein, Henri, 68000 Colmar (FR)
(74) Vertreter: Grauel, Andreas

(56) Entgegenhaltungen:
- EP-A- 1 205 321
- GB-A- 2 354 318
- NL-C- 1 011 332
- US-A- 4 401 013
- US-A- 5 333 678
- PATENT ABSTRACTS OF JAPAN vol. 2000, no. 11, 3. Januar 2001 (2001-01-03) & JP 2000 219024 A (ZEXEL CORP), 8. August 2000 (2000-08-08)

## Beschreibung

Die Erfindung betrifft eine Zusatzklimaanlage für ein mit einer Hauptklimaanlage ausgestattetes Kraftfahrzeug.

Moderne Kraftfahrzeuge, insbesondere größere Limousinen oder Vans, werden vielfach zusätzlich zu einer Hauptklimaanlage mit einer Zusatzklimaanlage ausgestattet, die unter den hinteren Sitzen oder im Kofferraum des Kraftfahrzeuges untergebracht ist. Während die Hauptklimaanlage, die im Motorraum bzw. im Armaturenbrett angeordnet ist, den vorderen Fahrzeuginnenraum, wo Fahrer und Beifahrer sitzen, mit klimatisierter Luft versorgt, übernimmt die Zusatzklimaanlage die Klimatisierung des rückwärtigen Bereiches des Fahrzeuginnenraumes, sodass der ganze Fahrzeuginnenraum annähernd gleichmäßig klimatisiert ist. Ein Problem derartiger Zusatzklimaanlagen ist der Bauraum, der in der Regel nicht oder nur in sehr geringem Umfang zur Verfügung steht.

Aus der US 5,333,678 ist ein Klimatisiemngssystem, insbesondere für einen Track bekannt, bei welchem eine Hauptklimaanlage in einer Kabine und eine Hilfsklimaanlage in einem Schlafbereich angeordnet sind.

Es ist daher Aufgabe der vorliegenden Erfindung, eine Zusatzklimaanlage der eingangs genannten Art zu schaffen, die wenig Bauraum beansprucht und die Grundvoraussetzungen einer Zusatzklimatisierung erfüllt.

Diese Aufgabe wird durch die Merkmale des Patentanspruches 1 gelöst. Erfindungsgemäf3 weist diese Zusatzklimaanlage in einem Gehäuse ein Gebläse, eine elektrische Zusatzheizung und einen Verdampfer auf. Damit ist dieses Zusatzgerät in der Lage, Warmluft, Kaltluft und temperierte Luft zu erzeugen. Der Verdampfer der Zusatzanlage ist an den Kältemittelkreislauf der Nauptklimaanlage angeschlossen, die im Übrigen konventionell ausgebildet ist. Die Zusatzklimaanlage kann im Kofferraum des Kraftfahrzeuges untergebracht werden.

Weitere Ausgestaltungen der Erfindung ergeben sich aus den Unteransprüchen.

Vorteilhafterweise weist das Gehäuse der Zusatzklimaanlage neben einer Luftansaugöffnung für das Gebläse zwei Luftaustrittsöffnungen auf, von denen eine in den Fußraum des Kraftfahrzeuges führt und die andere für die Belüftung des Fahrzeuginnenraumes vorgesehen ist.

In Ausgestaltung der Erfindung ist stromabwärts vom Gebläse eine Luftverteilklappe angeordnet, die den Gebläseluftstrom entweder über die Zusatzheizung zur Erwärmung oder über den Verdampfer zur Abkühlung leitet. Zusatzheizung und Verdampfer sind somit parallel geschaltet, was den Vorteil eines geringen luftseitigen Druckabfalles mit sich bringt.

Die Zusatzheizung und der Verdampfer sind etwa V-förmig angeordnet, d. h. ihre Stirnflächen bilden einen spitzen Winkel miteinander. Innerhalb dieses V-förmigen Ausschnittes oder kurz V-Ausschnitt genannt, ist die Luftverteilklappe schwenkbar angeordnet. Dadurch ergibt sich eine besonders kompakte Bauweise.

In weiterer vorteilhafter Ausgestaltung der Erfindung ist - ebenfalls in dem V-Ausschnitt - eine Trennwand mit einer Mischklappe angeordnet, wobei die Mischklappe einen Bypass zum Verdampfer kontrolliert. Dadurch ist es möglich, die durch den Verdampfer strömende Luft im Durchsatz zu variieren und mit nicht abgekühlter Bypassluft zu mischen, um eine Temperierung zu erreichen. Diese temperierte Luft wird dem Belüftungsauslass zugeführt.

In weiterer vorteilhafter Ausgestaltung der Erfindung sind die Mischklappe und die Luftverteilklappe kinematisch miteinander gekoppelt und werden von einem gemeinsamen Antrieb, einem Aktuator oder Stellmotor, angetrieben. Die Koppelung kann vorteilhafterweise durch eine Koppelscheibe erfolgen, die beide Klappenwellen kinematisch miteinander verbindet und damit einen Zwanglauf zwischen Luftverteilklappe und Mischklappe herstellt.

In weiterer Ausgestaltung der Erfindung sind durch Ansteuerung über den Antrieb im Wesentlichen folgende drei Klappenstellungen vorgesehen: 1. nur Warmluft über den Zuheizer zum Fußraumauslass; 2. nur Kaltluft über den Verdampfer zum Belüftungsauslass; 3. keine Warmluft in den Fußraum, sondern temperierte Luft, d. h. durch den Verdampfer und durch den Bypass zum Belüftungsauslass. Durch diese drei Grundeinstellungen erfüllt die Zusatzklimaanlage bei minimalem Bauaufwand hinreichende, vorgegebene Klimatisierungsbedingungen, nämlich warmer Fußraum oder kalte oder temperierte Belüftung des Fahrzeuginnenraumes. Ein weiterer wesentlicher Vorteil, der sich vor allem kostenmäßig auswirkt, besteht darin, dass für die funktionsgerechte Einstellung von zwei Klappen, nämlich der Luftverteil- und der Mischklappe nur ein Stellmotor benötigt wird.

Ein Ausführungsbeispiel der Erfindung ist in der Zeichnung dargestellt und wird im Folgenden näher beschrieben. Es zeigen
- Fig. 1: eine Zusatzklimaanlage,
- Fig.2a, 2b, 2c: drei Klappenpositionen der Zusatzklimaanlage gemäß Fig. 1,
- Fig. 3: ein Diagramm der Klappenwinkel in Abhängigkeit von der Einstellung des Klappenantriebes und
- Fig. 4: eine perspektivische Darstellung der Zusatzklimaanlage.

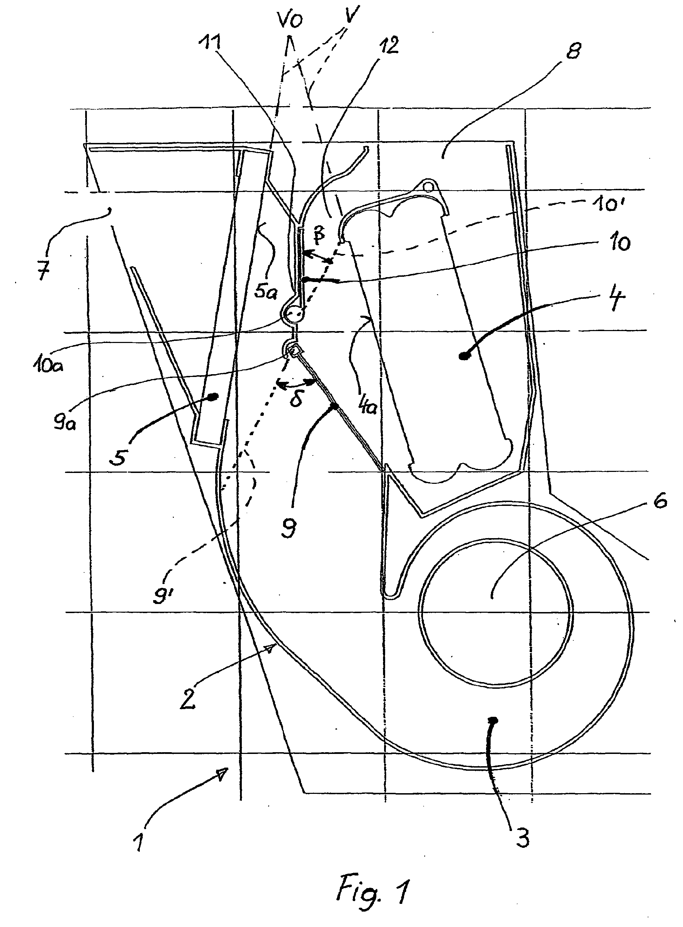

**Fig. 1** zeigt eine Zusatzklimaanlage 1 mit einem Gehäuse 2, in welchem ein Gebläse 3, ein Verdampfer 4 und eine elektrische Zusatzheizung, ein so genannter Zuheizer 5, angeordnet sind. Die Zusatzklimaanlage 1 weist eine Luftansaugöffnung 6 sowie zwei Luftaustrittsöffnungen, einen Fußraumauslass 7 und einen Belüftungsauslass 8, auf. Eine solche Zusatzklimaanlage 1 wird zusätzlich zu einer Hauptklimaanlage in ein Kraftfahrzeug eingebaut, vorzugsweise in dessen Kofferraum. Die nicht dargestellte Hauptklimaanlage ist konventionell ausgebildet und im vorderen, d. h. im Motorbereich des Fahrzeuges angeordnet. Sie weist neben einem Heizkörper einen Verdampfer auf, der an einen Kältemittelkreislauf angeschlossen ist, an welchen auch der Verdampfer 4 der Zusatzklimaanlage anschließbar ist. Im Gegensatz zu der nicht dargestellten Hauptklimaanlage, die einen von Kühlmittel durchströmten Heizkörper aufweist, ist der Zuheizer 5 der Zusatzklimaanlage 1 als elektrische Heizung ausgebildet und vorzugsweise mit hier nicht dargestellten PTC-Heizelementen ausgerüstet. Derartige elektrische Zuheizer sind bekannt, z. B. durch die DE-A 199 57 452 oder die DE-A 199 11 547. Der elektrische Zuheizer 5 wird also an das Bordnetz angeschlossen. Zur Luftverteilung sind in der Zusatzklimaanlage 1 zwei Klappen vorgesehen, nämlich eine Luftverteilklappe 9 und eine Mischklappe 10. Beide Klappen 9, 10 weisen endseitig Klappenwellen 9a, 10a auf, die im Endbereich einer Trennwand 11 gelagert sind, welche sich zwischen Zuheizer 5 und Verdampfer 4 erstreckt. Der Zuheizer 5 weist eine lufteintrittsseitige Stirnfläche 5a und der Verdampfer 4 eine lufteintrittsseitige Stirnfläche 4a auf. Die durch die beiden Stirnflächen 5a, 4a aufgespannten Ebenen sind als gestrichelte Linien dargestellt und mit V bezeichnet. Die gestrichelten Linien V schneiden sich im Schnittpunkt V0. Der Verdampfer 4 und der Zuheizer 5 sind also V-förmig angeordnet und bilden zwischen sich einen V-Ausschnitt, der durch die Linien V bzw. die Stirnflächen 5a, 4a begrenzt wird. In diesem V-Ausschnitt sind sowohl die Luftverteilklappe 9 als auch die Mischklappe 10 angeordnet. Ihre beiden Klappenwellen 9a, 10a liegen relativ dicht beieinander, sie werden durch einen hier nicht sichtbaren gemeinsamen Antrieb angetrieben und sind kinematisch miteinander gekoppelt, sodass zwischen beiden Klappen 9, 10 ein Zwanglauf besteht. Die Luftverteilklappe 9 kann zwei Endlagen einnehmen, von denen eine Endlage 9 in ausgezogenen Linien und die andere Endlage 9' in gestrichelten Linien dargestellt ist. Der Winkel zwischen beiden Endlagen 9, 9' ist mit δ bezeichnet. Die Mischklappe 10 kann zwischen einer Endlage 10 (durchgezogene Linien) und einer Endlage 10' (gestrichelte Linie) verschwenkt werden. Zwischen dem Verdampfer 4 bzw. seiner einstrittsseitigen Stirnfläche 4a und der Trennwand 11 ist ein Verdampferbypass 12 angeordnet, der durch die Mischklappe 10 kontrolliert wird.

Die Zusatzklimaanlage 1 arbeitet im Wesentlichen wie folgt: Frischluft und/oder Umluft wird über das Radialgebläse 3 axial über die Luftansaugöffnung 6 angesaugt und in das Gehäuse 2 in den Bereich der Luftverteilklappe 9 gefördert. Dort wird die Luft, d. h. der Gebläsestrom - je nach Stellung der Luftverteilklappe 9 - entweder in den rechten Bereich des Gehäuses 2, wo der Verdampfer 4 angeordnet ist, oder in den linken Bereich des Gehäuses 2, wo der Zuheizer 5 angeordnet ist, gelenkt. In der dargestellten Position 9 der Luftverteilklappe gelangt also der gesamte Gebläsestrom in den linken Teil des Gehäuses 2, durchströmt somit den Zuheizer 5 und gelangt als erwärmte Luft über den Auslass 7 in den Fußraum. Befindet sich die Luftverteilklappe in der Endlage 9', so gelangt der gesamt Gebläsestrom in den Bereich des Verdampfers 4, wobei er diesen - je nach Stellung der Mischklappe 10 - ganz oder teilweise durchströmt und somit abgekühlt wird. Der gekühlte Luftstrom gelangt über den Auslass 8 in den Fahrzeuginnenraum zur Belüftung.

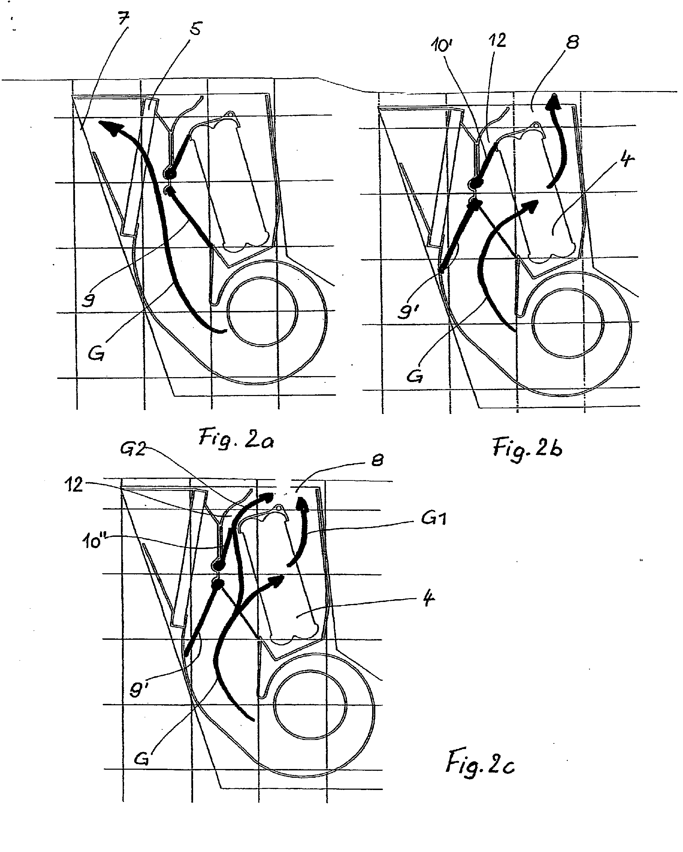

In den **Fig. 2a, 2b** und **2c** sind drei grundsätzliche Klappenpositionen sowie die sich daraus ergebenden Luftströme dargestellt. Diese Klappenpositionen ergeben sich aus drei verschiedenen Einstellungen des hier nicht dargestellten Antriebsmotors, der - wie bereits erwähnt - beide miteinander gekoppelten Klappen antreibt. Damit ist jeweils einer bestimmten Stellung der Luftverteilklappe eine bestimmte Stellung der Mischklappe zugeordnet. Im Folgenden werden die Bezugszahlen aus Fig. 1 für gleiche Teile übernommen.

**Fig. 2a** zeigt die Zusatzklimaanlage 1 in der Stellung "Fußraum warm", d. h. die Luftverteilklappe 9 lenkt den gesamten Gebläsestrom, hier dargestellt durch einen Pfeil G, durch den Zuheizer 5. Damit wird der Fußraum des Kraftahrzeuges erwärmt.

**Fig. 2b** zeigt die Luftverteilklappe in der entgegengesetzten Endlage 9' und die Mischklappe in der Position 10', d. h. der Verdampferbypass 12 ist versperrt. Der gesamte Gebläseluftstrom G durchströmt den Verdampfer 4, wird dort abgekühlt und verlässt die Zusatzklimaanlage 1 durch den Belüftungsauslass 8.

**Fig. 2c** zeigt eine Abwandlung der Position gemäß Fig. 2b mit gleicher Position 9' der Luftverteilklappe, jedoch leicht geöffneter Mischklappe, die die Position 10", d. h. eine Zwischenstellung einnimmt, sodass der Bypass 12 nur zum Teil geöffnet ist. Damit geht ein Teilstrom G1 durch den Verdampfer 4 und ein Teilstrom G2 durch den Bypass 12, wobei sich der kalte Strom G1 hinter dem Verdampfer 4 mit dem nicht abgekühlten Teilstrom G2 mischt, wodurch eine Mischtemperatur erzielt wird. Dieser Betriebszustand wird mit Temperierung bezeichnet, d. h. die in den Fahrzeuginnenraum gelangende Luft hat eine Mischtemperatur, die zwischen "kalt" und "warm" liegt.

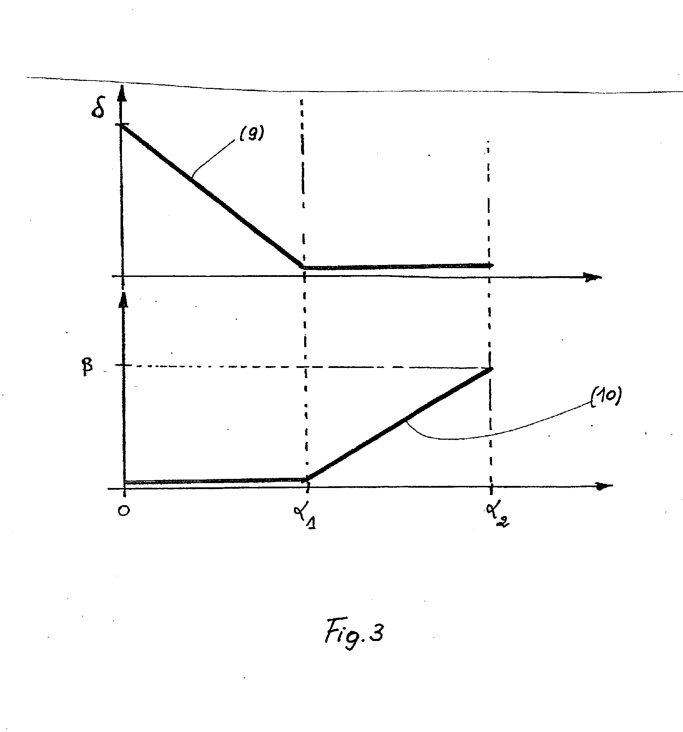

**Fig. 3** zeigt ein Diagramm, in welchem einerseits der Klappenwinkel δ der Luftverteilklappe 9 und andererseits der Klappenwinkel β der Mischklappe 10 über drei verschiedenen Einstellungen des Antriebsmotors, nämlich 0, α1 und α2 aufgetragen sind. Bei der Stellung 0, entsprechend Fig. 2a, ist die Luftverteilklappe 9 "auf" und die Mischklappe 10 "zu". Bei der nächsten Antriebsstellung α1 wird die Luftverteilklappe 9 auf Stellung "zu" gefahren, die Mischklappe 10 bleibt auf Stellung "zu". Diese Stellung α1 entspricht Fig. 2b. Durch einen weiteren Stellweg von der Position α1 auf α2 des Antriebsmotors wird die Mischklappe 10 von "zu" bis "auf" verstellt - bei gleichbleibender Position der Luftverteilklappe 9. Zwischen den Stellungen α1 und α2 sind Zwischenstellungen der Misch- oder Bypassklappe 10 und damit eine Temperierung der Luft möglich.

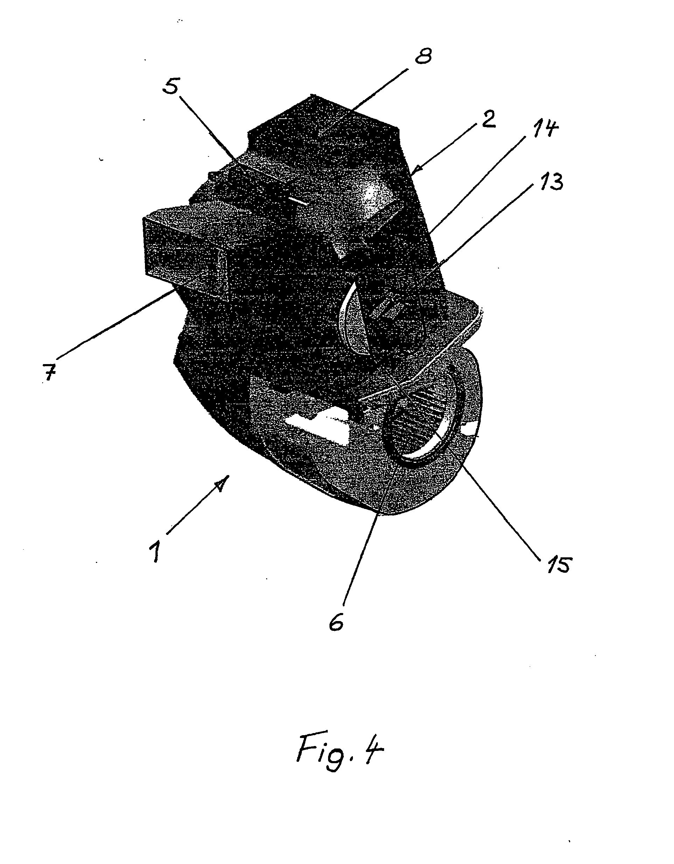

**Fig. 4** zeigt die Zusatzklimaanlage 1 (gleiche Bezugszahlen wie zuvor) in einer perspektivischen Darstellung mit Luftansaugöffnung 6, Fußraumauslass 7, Belüftungsauslass 8 sowie mit dem elektrischen Zuheizer 5, der mit seinem elektrischen Anschlussteil aus dem Gehäuse 2 herausragt. Auf der Außenseite des Gehäuses 2 ist ein elektrischer Stellmotor 13 als Antriebsmotor angeordnet und auf einer Platte 14 befestigt. Zwischen der Gehäusewand 2 und der Platte 14 ist eine teilweise sichtbare Koppelscheibe 15 drehbar angeordnet, welche die beiden hier nicht erkennbaren Klappenwellen 9a, 10a (vgl. Fig. 1) kinematisch miteinander verbindet. Die Koppelscheibe 15 wird durch den Stellmotor 13 angetrieben und treibt ihrerseits die beiden Klappenwellen 9a, 10a an. Somit ist nur ein Antrieb 13 für beide Klappen vorgesehen.

### Bezugszahlen

- 1: Zusatzklimaanlage
- 2: Gehäuse
- 3: Gebläse
- 4: Verdampfer
- 4a: Stirnfläche, Verdampfer
- 5: Zuheizer
- 5a: Stirnfläche, Zuheizer
- 6: Luftansaugöffnung
- 7: Fußraumauslass
- 8: Belüftungsauslass
- 9: Luftverteilklappe
- 9a: Luftverteilklappenwelle
- 10: Mischklappe
- 10a: Mischklappenwelle
- 11: Trennwand
- 12: Verdampferbypass
- 13: Stellmotor
- 14: Befestigungsplatte
- 15: Koppelscheibe

## Patentansprüche

1. Zusatzklimaanlage für ein mit einer Hauptklimaanlage ausgestattetes Kraftfahrzeug, wobei die Zusatzklimaanlage (1) folgende in einem Gehäuse (2) angeordnete Komponenten aufweist: ein Gebläse (3), und einen Verdampfer (4), **dadurch gekennzeichnet, dass** die Zusatzklimaanlage eine im Gehäuse (2) angeordnete elektrische Zusatzheizung (5) aufweist, wobei die Zusatzheizung (5) und der Verdampfer (4) etwa V-förmig zueinander angeordnet sind und im Bereich des V-Auschnittes in Luftströmungsrichtung hinter dem Gebläse (3) eine Luftverteilklappe (9) angeordnet ist, mittels welcher der Gebläseluftstom G auf den Verdampfer (4) oder die Zusatzheizung (5) lenkbar ist.

2. Zusatzklimaanlage nach Anspruch 1, **dadurch gekennzeichnet, dass** das Gehäuse (2) eine Luftansaugöffnung (6) für das Gebläse (3) und Luftaustrittsöffnungen (7, 8) für den Fußraum und für die Belüftung des Innenraumes des Kraftfahrzeuges aufweist.

3. Zusatzklimaanlage nach Anspruch 1 oder 2, **dadurch gekennzeichnet, dass** zwischen der Zusatzheizung (5) und dem Verdampfer (4) eine Trennwand (11) mit einem Endbereich angeordnet ist, an welchem die Luftverteilklappe (9) angelenkt ist.

4. Zusatzklimaanlage nach Anspruch 3, **dadurch gekennzeichnet, dass** an der Trennwand (11) eine Mischklappe (10) angelenkt ist, mittels welcher der Gebläseluftstrom G durch den Verdampfer (4) und/oder durch einen Verdampferbypass (12) lenkbar ist.

5. Zusatzklimaanlage nach Anspruch 4, **dadurch gekennzeichnet, dass** die Belegungen der Luftverteilklappe (9) und der Mischklappe (10) kinematisch miteinander gekoppelt sind und dass Luftverteil- und Mischklappe (9, 10) einen gemeinsamen Antrieb (13) aufweisen.

6. Zusatzklimaanlage nach Anspruch 5, **dadurch gekennzeichnet, dass** die Luftverteilklappe (9) und die Mischklappe (10) zwangsweise in Abhängigkeit von Stellbewegungen 0, a 1, a 2 des Antriebs (13) vorbestimmte Lagen (β0, β1, β2: δ0, δ1, δ2) einnehmen.

7. Zusatzklimaanlage nach Anspruch 4, 5 oder 6, **dadurch gekennzeichnet, dass** die Luftverteil- und die Mischklappe (9, 10) parallel nebeneinander angeordnete Klappenwellen (9a, 10a) aufweisen, die durch eine Koppelscheibe (15) miteinander gekoppelt sind.

8. Zusatzklimaanlage nach Anspruch 7, **dadurch gekennzeichnet, dass** die Koppelscheibe (15) durch den gemeinsamen Antrieb (13) antreibbar ist.

9. Zusatzklimaanlage nach Anspruch 8, **dadurch gekennzeichnet, dass** der gemeinsame Antrieb als elektrischer Stellmotor (13) ausgebildet ist.

## Claims

1. Auxiliary air-conditioning unit for a vehicle equipped with a main air-conditioning unit, wherein the auxiliary air-conditioning unit (1) has the following components arranged in a casing (2): a fan (3) and an vaporiser (4), **characterised in that** the auxiliary air-conditioning unit comprises an electric supplementary heater (5) arranged in the casing (2), wherein the supplementary heater (5) and the vaporiser (4) are arranged approximately V-shaped to one another and that an air distribution flap (9) is arranged in the region of the V-section in the air flow direction behind the fan (3), by means of which the fan air flow G can be guided to the vaporiser (4) or the supplementary heater (5).

2. Auxiliary air-conditioning unit according to claim 1, **characterised in that** the casing (2) comprises an air intake opening (6) for the fan (3) and air outlet openings (7, 8) for the footwell and for the ventilation of the interior of the vehicle.

3. Auxiliary air-conditioning unit according to claim 1 or 2, **characterised in that** a separating plate (11) with an end region to which the air distribution flap (9) is linked is arranged between the supplementary heater (5) and the vaporiser (4).

4. Auxiliary air-conditioning unit according to claim 3, **characterised in that** a mixing flap (10) is linked to the separating plate (11), by means of which flap the fan air flow G can be guided through the vaporiser (4) and/or through a vaporiser bypass (12).

5. Auxiliary air-conditioning unit according to claim 4, **characterised in that** the movements of the air distribution flap (9) and the mixing flap (10) are coupled to one another in a kinematic manner, and that the air distribution and mixing flap (9, 10) have a common drive (13).

6. Auxiliary air-conditioning unit according to claim 5, **characterised in that** the air distribution flap (9) and the mixing flap (10) take up predetermined positions (β0, β1, β2, δ0, δ1, δ2) in an enforced manner in dependence on actuations 0, α 1, a 2 of the drive (13).

7. Auxiliary air-conditioning unit according to claim 4, 5 or 6, **characterised in that** the air distribution and the mixing flap (9, 10) have flap shafts (9a, 10a) arranged in parallel to one another, which are coupled to one another by a coupling disc.

8. Auxiliary air-conditioning unit according to claim 7, **characterised in that** the coupling disc (15) can be driven by the common drive (13).

9. Auxiliary air-conditioning unit according to claim 8, **characterised in that** the common drive is formed as an electric servo motor (13).

## Revendications

1. Système de climatisation auxiliaire pour un véhicule automobile équipé d'un système de climatisation principal, où le système de climatisation auxiliaire (1) présente des composants suivants, disposés dans un carter (2) : une soufflante (3) et un évaporateur (4), **caractérisé en ce que** le système de climatisation auxiliaire présente un chauffage auxiliaire (5) électrique disposé dans le carter (2), où le chauffage auxiliaire (5) et l'évaporateur (4) sont disposés l'un par rapport à l'autre, à peu près en forme de V, et un volet répartiteur d'air (9) est disposé, dans la zone de la découpe en V, derrière la soufflante (3) dans la direction d'écoulement d'air, volet répartiteur d'air au moyen duquel le flux d'air G de la soufflante peut être dirigé sur l'évaporateur (4) ou sur le chauffage auxiliaire (5).

2. Système de climatisation auxiliaire selon la revendication 1, **caractérisé en ce que** le carter (2) présente une ouverture d'aspiration d'air (6) pour la soufflante (3) et des ouvertures de sortie d'air (7, 8) pour l'espace pour les pieds et pour la ventilation de l'habitacle du véhicule automobile.

3. Système de climatisation auxiliaire selon la revendication 1 ou 2, **caractérisé en ce qu'**une paroi de séparation (11), comportant une zone d'extrémité, est disposée entre le chauffage auxiliaire (5) et l'évaporateur (4), zone d'extrémité sur laquelle est articulé le volet répartiteur d'air (9).

4. Système de climatisation auxiliaire selon la revendication 3, **caractérisé en ce qu'**un volet mélangeur (10) est articulé sur la paroi de séparation (11), volet mélangeur au moyen duquel le flux d'air G de la soufflante peut être dirigé à travers l'évaporateur (4) et / ou à travers une dérivation (12) de l'évaporateur.

5. Système de climatisation auxiliaire selon la revendication 4, **caractérisé en ce que** les mouvements du volet répartiteur d'air (9) et du volet mélangeur (10) sont couplés entre eux de façon cinématique, et **en ce que** le volet répartiteur d'air (9) et le volet mélangeur (10) présentent un dispositif d'entraînement commun (13).

6. Système de climatisation auxiliaire selon la revendication 5, **caractérisé en ce que** le volet répartiteur d'air (9) et le volet mélangeur (10) prennent obligatoirement des positions prédéterminées (β0, β1, β2 ; δ0, δ1, δ2) en fonction de mouvements de réglage 0, α 1, α 2 du dispositif d'entraînement (13).

7. Système de climatisation auxiliaire selon la revendication 4, 5 ou 6, **caractérisé en ce que** le volet répartiteur d'air (9) et le volet mélangeur (10) présentent des tiges de volet (9a, 10a) disposées parallèlement l'une à côté de l'autre, lesquelles tiges de volet sont couplées l'une à l'autre par une plaque de couplage (15).

8. Système de climatisation auxiliaire selon la revendication 7, **caractérisé en ce que** la plaque de couplage (15) peut être entraînée par le dispositif d'entraînement commun (13).

9. Système de climatisation auxiliaire selon la revendication 8, **caractérisé en ce que** le dispositif d'entraînement commun est conçu comme un servomoteur électrique (13).
